# EUROPÄISCHE PATENTANMELDUNG

(11) **EP 3 691 067 A1**
(43) Veröffentlichungstag der Anmeldung: **05.08.2020**
(21) Anmeldenummer: 19154823.9
(22) Anmeldetag: 31.01.2019
(51) Int. Cl.: H02H 7/26, H02J 1/06, H02M 1/32

(54) **GLEICHSPANNUNGSSCHALTER**

(71) Anmelder: Siemens Aktiengesellschaft, 80333 München (DE)
(72) Erfinder: Köllensperger, Peter, 90425 Nürnberg (DE)

(57) **Zusammenfassung**

Die Erfindung betrifft einen Gleichspannungsschalter (1), aufweisend einen ersten Anschluss (11) eines ersten Potentials, einen zweiten Anschluss (12) des ersten Potentials und einen ersten Anschluss (21) eines zweiten Potentials, wobei zwischen dem ersten Anschluss (11) des ersten Potentials und dem zweiten Anschluss (12) des ersten Potentials ein Schalter (2) angeordnet ist. Zur Verbesserung des Gleichspannungsschalters wird vorgeschlagen, dass zwischen dem ersten Anschluss (11) des ersten Potentials und dem ersten Anschluss (21) des zweiten Potentials eine Entladevorrichtung (3) angeordnet ist. Die Erfindung betrifft ferner ein Gleichspannungsnetz (10) mit einem derartigen Gleichspannungsschalter (1), wobei das Gleichspannungsnetz (10) eine elektrische Komponente (6) aufweist, wobei die elektrische Komponente (6) mit dem ersten Anschluss (11) und dem zweiten Anschluss (12) des ersten Potentials verbunden ist. Weiter betrifft die Erfindung ein Verfahren zum Betreiben eines derartigen Gleichspannungsschalters (1) oder eines derartigen Gleichspannungsnetzes (10), wobei die Entladevorrichtung (3) den ersten Anschluss (11) des ersten Potentials und den ersten Anschluss (21) des zweiten Potentials zumindest zeitweise miteinander verbindet, wenn der Gleichspannungsschalter (1) ausgeschaltet wird oder ausgeschaltet ist.

## Beschreibung

Die Erfindung betrifft einen Gleichspannungsschalter aufweisend einen ersten Anschluss eines ersten Potentials und einen zweiten Anschluss des ersten Potentials, wobei zwischen dem ersten Anschluss des ersten Potentials und dem zweiten Anschluss des ersten Potentials ein Schalter angeordnet ist. Weiter betrifft die Erfindung ein Gleichspannungsnetz mit einem derartigen Gleichspannungsschalter. Die Erfindung betrifft ferner ein Verfahren zum Betreiben eines derartigen Gleichspannungsschalters oder eines derartigen Gleichspannungsnetzes.

Ein Gleichspannungsschalter dient zum Schalten von Strömen, die vorzugsweise von einer Gleichspannung getrieben werden. Da es sich dabei um Gleichströme handelt, wird dieser Schalter auch als Gleichstromschalter bezeichnet, insbesondere dann, wenn dieser Schalter nur an einer Phase angeschlossen wird und nur zwei Anschlüsse aufweist.

Da an den hier vorliegenden Gleichspannungsschalter an seinen Anschlüssen nicht nur ein Potential eines Leiters sonders jeweils eine Spannung, beispielsweise die Spannung eines Gleichspannungsnetzes, angeschlossen wird, hat sich auch der Begriff Gleichspannungsschalter für diese Art von Schaltern etabliert. Dabei steht an den ersten Anschlüssen und den zweiten Anschlüssen des Gleichspannungsschalters jeweils eine Spannung an, die sich als Differenz aus dem ersten und dem zweiten Potential ergibt. Wenn der Schalter geschlossen ist, ist die Spannung zwischen den ersten Anschlüssen gleich der Spannung zwischen den zweiten Anschlüssen. Bei geöffnetem Schalter können die Spannungen sich unterscheiden.

Typische Komponenten in Wechselspannungsnetzen, auch als AC-Netze bezeichnet, sind Transformatoren, Umrichter mit Diodeneinspeisung, Motoren und andere ohmsch-induktive Lasten. Werden diese über einen Schalter vom Versorgungsnetz getrennt, so verbleibt in der Regel keine Spannung auf der Leitung und dieser Zustand ist stabil.

In Gleichspannungsnetzen, auch als DC-Netze bezeichnet, sind die angeschlossen Lasten entweder kapazitiv, ohmsch-kapazitiv oder ohmsch-induktiv. Dabei kann sich nach dem Abschalten von Komponenten des Netzes durch einen Gleichspannungsschalter aufgrund von Restladungen oder Umladungsprozessen in den Kondensatoren und/oder Induktivitäten gespeicherte elektrische Energien wieder eine Spannung im Gleichspannungsnetz aufbauen. Diese erreicht zwar nicht zwingend die Nennspannung, kann aber durchaus eine nicht zu vernachlässigende Höhe erreichen. Dadurch kann es zu ungewollten Effekten im eigentlich abgeschalteten Netz kommen und es kann auch eine Gefährdung bei der Vorbereitung von Arbeiten am Netz auftreten.

Durch die Verwendung von Spannungszwischenkreisumrichtern und DC/DC Wandlern, die jeweils Zwischenkreiskondensatoren besitzen, tritt dieses Problem der vorliegenden oder sich aufbauenden Spannung im abgeschalteten Gleichspannungsteilnetz vermehrt auf.

Der Erfindung liegt die Aufgabe zugrunde, einen Gleichspannungsschalter zu verbessern.

Diese Aufgabe wird durch einen Gleichspannungsschalter, aufweisend einen ersten Anschluss eines ersten Potentials, einen zweiten Anschluss des ersten Potentials und einen ersten Anschluss eines zweiten Potentials gelöst, wobei zwischen dem ersten Anschluss des ersten Potentials und dem zweiten Anschluss des ersten Potentials ein Schalter angeordnet ist, wobei zwischen dem ersten Anschluss des ersten Potentials und dem ersten Anschluss des zweiten Potentials eine Entladevorrichtung angeordnet ist. Ferner wird diese Aufgabe durch ein Gleichspannungsnetz mit einem derartigen Gleichspannungsschalter gelöst, wobei das Gleichspannungsnetz eine elektrische Komponente aufweist, wobei die elektrische Komponente mit dem ersten Anschluss und dem zweiten Anschluss des ersten Potentials des Gleichspannungsschalters verbunden ist. Diese Aufgabe wird weiter durch ein Verfahren zum Betreiben eines derartigen Gleichspannungsschalters oder eines derartigen Gleichspannungsnetzes, wobei die Entladevorrichtung den ersten Anschluss des ersten Potentials und den ersten Anschluss des zweiten Potentials zumindest zeitweise miteinander verbindet, wenn der Gleichspannungsschalter ausgeschaltet wird oder ausgeschaltet ist.

Weitere vorteilhafte Ausgestaltungen der Erfindung sind in den abhängigen Ansprüchen angegeben.

Der Erfindung liegt die Erkenntnis zugrunde, dass sich ein Gleichspannungsschalter dadurch verbessern lässt, dass dieser eine Entladevorrichtung aufweist. Der Gleichspannungsschalter kann dabei den ersten Anschluss und den zweiten Anschluss des ersten Potentials miteinander elektrisch verbinden, dann ist er im geschlossenen oder leitenden Zustand, oder trennen, dann ist er im geöffneten oder nichtleitenden Zustand. Da sich in einem Gleichspannungsnetz oder Gleichspannungsteilnetz, das von einer Energiequelle, insbesondere von einer Spannungsquelle, elektrisch getrennt ist, auch Spannungen aufgrund gespeicherter Energien ausbilden können, hat es sich als vorteilhaft erwiesen, diese Potentiale des Gleichspannungsnetzes miteinander mittels der Entladevorrichtung zu verbinden und damit spannungslos zu machen. Durch das Verbinden des ersten Anschlusses des ersten Potentials und des ersten Anschlusses des zweiten Potentials wird eine Spannung zwischen dem ersten und dem zweiten Potential mit Hilfe von Ausgleichsströmen abgebaut und direkt oder nach Abklingen der Ausgleichsströme zu null gebracht. Damit sind die an den ersten Anschlüssen des Gleichspannungsschalters angeschlossenen Komponenten spannungslos und damit in einem sicheren Zustand.

Das Verbinden der unterschiedlichen Potentiale der Entladevorrichtung kann auch als Kurzschließen bezeichnet werden. Dabei unterscheidet man ein weiches Kurzschließen, das unter Verwendung eines Widerstandes hochohmig ausgebildet ist und Ausgleichsströme mit dem Widerstand begrenzen kann. Auf der anderen Seite erfolgt ein hartes Kurzschließen indem der Schalter die Potentiale direkt miteinander niederohmig verbindet. Der wirksame Widerstand ergibt sich dann aus dem Widerstand des Schalters und der entsprechenden Leitungen.

Es hat sich als vorteilhaft erwiesen, an den ersten Anschlüssen einen elektrischen Verbraucher als Last anzuschließen, bei dem eine Restspannung aufgrund von gespeicherten Energien nicht ausgeschlossen werden kann. Die Energieflussrichtung ergibt sich dann in vorteilhafter Weise, wenn durch die Last keine Rückspeisung erfolgt, von den zweiten Anschlüssen des Gleichspannungsschalters zu den ersten Anschlüssen.

Für den Fall, dass sich an den ersten Anschlüssen des Gleichspannungsschalters auch elektrische Komponenten angeordnet sind, die in der Lage sind, eine Spannung zu erzeugen, wie beispielsweise Batterien, sollte die Entladevorrichtung abschaltbar sein, so dass auch vor Einschalten des Gleichspannungsschalters die abgeschaltete Seite des Gleichspannungsschalters, in diesem Fall an den ersten Anschlüssen, bereits eine Spannung annehmen kann. Andernfalls könnte es zu einer Überlastung der Entladevorrichtung kommen.

Bei einer vorteilhaften Ausgestaltung der Erfindung weist der Gleichspannungsschalter einen zweiten Anschluss des zweiten Potentials auf, wobei zwischen dem zweiten Anschluss des ersten Potentials und dem zweiten Anschluss des zweiten Potentials eine weitere Entladevorrichtung angeordnet ist. Durch die weitere Entladungsvorrichtung weist der Gleichspannungsschalter beidseitig die Möglichkeit auf, sicher eine Spannung im abgeschalteten Zustand zu vermeiden. Der Schalter ist damit auch gegenüber seinen ersten und zweiten Anschlüssen symmetrisch aufgebaut, so dass ein fehlerhafter Anschluss ausgeschlossen ist.

Für die Verbindung zweier Gleichspannungsteilnetze durch den Gleichspannungsschalter ist es vorteilhaft, dass dieser sowohl an den ersten Anschlüssen als auch an den zweiten Anschlüssen eine Entladevorrichtung bzw. eine weitere Entladevorrichtung aufweist. Da beide Gleichspannungsteilnetze in den spannungslosen Zustand gebracht werden können, ist es vorteilhaft, dass der Gleichspannungsschalter an beiden Seiten eine Entladevorrichtung bzw. weitere Entladevorrichtung aufweist. Damit kann das abgeschaltete Teilnetz durch die Entladevorrichtung bzw. durch die weitere Entladevorrichtung gezielt entladen werden. Auch für den Fall, dass beide angeschlossenen Gleichspannungsteilnetze abgeschaltet sind ermöglicht der Gleichspannungsschalter, Restspannungen in beiden Gleichspannungsteilnetzen mit Hilfe der Entladevorrichtung und der weiteren Entladevorrichtung zu beseitigen.

Die Entladevorrichtung und die weitere Entladevorrichtung können baugleich sein. Dabei weisen sie beispielsweise ein gleiches schaltendes Element auf. Auch ein gleicher Widerstand, so er vorgesehen ist, ist möglich. Alternativ ist es möglich, dass sich die Entladevorrichtung und die weitere Entladevorrichtung unterscheiden. Dabei kann beispielsweise ein schaltendes Element und/oder der Widerstand auf die zur Beseitigung von Restspannungen entstehenden Ströme dimensioniert werden. Im Allgemeinen ergibt sich dabei für die beiden Seiten, d.h. die ersten Anschlüsse auf der einen Seite und die zweiten Anschlüsse auf der anderen Seite, des Schalters unterschiedliche Dimensionierungen und damit unterschiedliche Komponenten.

Bei einer weiteren vorteilhaften Ausgestaltung der Erfindung ist zwischen dem ersten Anschluss des zweiten Potentials und dem zweiten Anschluss des zweiten Potentials ein weiterer Schalter angeordnet. In dieser Ausgestaltung lassen sich beide Potentiale zwischen den ersten Anschlüssen und den zweiten Anschlüssen voneinander trennen. Damit ist die Verbraucherseite dann nicht nur von der Spannung der Versorgerseite getrennt, sondern darüber hinaus auch potentialgetrennt oder je nach Schaltungsanordnung potentialfrei. Damit sinkt die Gefahr, beispielsweise aufgrund eines Erdschlusses, dass die abgeschaltete Seite des Gleichspannungsschalters noch mit einer gefährlichen Spannung beaufschlagt ist. Durch den weiteren Schalter kann der Gleichspannungsschalter beide Potentiale in einem Gleichspannungsnetz abschalten, so dass diese Ausgestaltung sich im Besonderen für die Verwendung in einem Gleichspannungsnetz eignet und einen guten Schutz des Gleichspannungsnetzes bei Auftreten eines Erdschlusses bildet.

Bei einer weiteren vorteilhaften Ausgestaltung der Erfindung sind der Schalter und der weitere Schalter miteinander gekoppelt. Dabei erfahren der Schalter und der weitere Schalter die gleiche Ansteuerung und schalten synchron. Dadurch wird auf einfache Weise ein zweipoliger oder mehrpoliger Schalter realisiert.

Bei einer weiteren vorteilhaften Ausgestaltung der Erfindung ist die Entladevorrichtung und/oder die weitere Entladevorrichtung derart ausgestaltet, die verbundenen Anschlüsse mit dem Erdpotential zu verbinden. Um auch die Berührsicherheit herzustellen und Arbeiten an einem abgeschalteten Teil des Gleichspannungsnetzes oder einem Gleichspannungsteilnetz durchführen zu können ist es vorteilhaft, wenn die Entladevorrichtung und/oder die Entladevorrichtung nicht nur die Spannungsfreiheit mit einer Potentialtrennung herstellt, sondern die Leiter des abgeschalteten Teils des Gleichspannungsnetzes sicher auf Erdpotential zu bringen. Dadurch kann die Erdung auf sichere Weise erfolgen, die für Arbeiten am abgeschalteten Netz aus Sicherheitsgründen zwingend erforderlich ist.

Bei einer weiteren vorteilhaften Ausgestaltung der Erfindung ist der Zustand der Entladevorrichtung und/oder der weiteren Entladevorrichtung anzeigbar. Dadurch kann auf einfache Weise für einen Bediener oder für Wartungspersonal erkannt werden, ob eine Gefahr und welche Gefahr durch eine Restspannung oder durch ein möglicherweise vorhandenes Potential vorliegt.

Bei einer weiteren vorteilhaften Ausgestaltung der Erfindung weist die Entladevorrichtung ein schaltendes Element, insbesondere einen mechanischen Schalter, einen Halbleiterschalter oder einen Thyristor, auf. Der Thyristor ist dabei eine Ausgestaltungsform eines Halbleiterschalters. Der mechanische Schalter, beispielsweise ausgebildet als mechanisches Relais, ist ein einfaches und kostengünstiges Element, einen Schalter zu realisieren. Ein Halbleiterschalter verfügt als Vorteil über sehr kurze Schaltzeiten. Gerade für Gleichspannungsnetzes zeichnet sich der Halbleiterschalter dadurch aus, dass kein Lichtbogen entsteht und somit auch große Gleichströme sicher und verschleißfrei geschaltet werden können. Als Halbleiterschalter kommt dabei beispielsweise ein IGBT in Frage, insbesondere dann, wenn der Entladevorgang unterbrechbar gestaltet werden soll. Ebenso ist es möglich, aufgrund des Steueranschlusses beispielsweise eines IGBTs, diesen Halbleiter im Linearbetrieb zu betreiben. Dabei kann er entsprechend Energie aus dem angeschlossenen Netz oder von einem angeschlossenen Verbraucher aufnehmen und in Wärme umwandeln. Mit anderen Worten kann er die Funktion eines Widerstandes übernehmen oder unterstützen.

Da in vielen Fällen davon auszugehen ist, dass ein Strom durch die Entladevorrichtung nach kurzer Zeit bereits zu null wird, ist auch ein Thyristor als schaltendes Element der Entladevorrichtung oder der weiteren Entladevorrichtung ohne großen Nachteil einsetzbar, da kein Strom abgeschaltet werden muss.

Bei einer weiteren vorteilhaften Ausgestaltung der Erfindung ist elektrisch in Reihe zum schaltenden Element ein Widerstand, insbesondere ein Heißleiter, angeordnet. Ein Heißleiter ist ein Widerstand mit einem negativen Temperaturkoeffizienten. Durch den Widerstand können die Entladeströme, die sich ergeben, um die Restspannung zu null zu bringen, reduziert werden. Ein Heißleiter hat sich für diese Anwendung als besonders vorteilhaft erwiesen, da sich ein schnelles Erhitzen durch die hohen Ausgleichsströme sich nicht negativ auf den Widerstandswert auswirkt und zu einer Stromsenkung führen würde. Die Entladeströme ergeben sich unter anderem aus Energiespeichern, die sich im Energieversorgungsnetz, einem Teil des Energieversorgungsnetzes oder im Verbraucher befinden. Typische Energiespeicher sind Kondensatoren, Induktivitäten, Batterien oder rotierende Anwendungen.

Die Verwendung eines Widerstands erhöht zwar die Entladedauer dieser Restspannung, schont jedoch das schaltende Element der Entladevorrichtung bzw. der weiteren Entladevorrichtung. Der Widerstand kann dabei innerhalb des Gehäuses des Gleichspannungsschalters angeordnet werden, so dass dieser zu einer kompakten Baueinheit wird oder außerhalb des Gehäuses. Durch die Kombination von schaltendem Element und Widerstand kann die Entladevorrichtung auch zusätzlich als Bremschopper verwendet werden, der beispielsweise nicht rückspeisbare Energie eines elektrischen Verbrauchers in Wärme umwandelt. Dabei wird das schaltende Element in vorteilhafter Weise leistungsstärker dimensioniert und der Widerstand außerhalb des Gehäuses des Gleichspannungsschalters angeordnet, um einen einfachen Übergang der Wärme vom Widerstand an die Umgebung zu ermöglichen.

Darüber hinaus ist es möglich, die Temperatur des Widerstandes und/oder des schaltenden Elements zu überwachen. Dies kann auf Basis einer Temperaturmessung oder eines errechneten Temperaturwertes, beispielsweise aus einem Temperaturmodell, geschehen. Sobald ein vorgebbarer Grenzwert überschritten wird, wird der Entladeschalter abgeschaltet, der Widerstand und/oder der Entladeschalter können nach dem Abschalten abkühlen. Weiter ist es möglich, aber nicht notwendig, nach Unterschreiten eines weiteren vorgebbaren Grenzwertes die Entladevorrichtung wieder einzuschalten und die Entladung fortsetzen. Die Entladung dauert zwar mit dieser Überwachung länger, aber die Entladevorrichtung ist vor einer Überlastung und einer damit einhergehenden Beschädigung geschützt.

Bei einer weiteren vorteilhaften Ausgestaltung der Erfindung erfolgt das Verbinden, wenn der Gleichspannungsschalter ausgeschaltet ist und eine Spannung zwischen dem ersten Anschluss des ersten Potentials und dem ersten Anschluss des zweiten Potentials und/oder eine Spannung zwischen dem zweiten Anschluss des ersten Potentials und dem zweiten Anschluss des zweiten Potentials einen vorgebbaren Wert überschreitet oder unterschreitet. Mit dem Verbinden ist das Miteinander Verbinden gemeint. Zum einen hat es sich als sinnvoll erwiesen, bei einer zu hohen anliegenden Spannung am abgeschalteten Teil des Gleichspannungsschalters mittels der Entladevorrichtung diese Spannung zu reduzieren oder zu beseitigen. Damit werden gefährliche Berührspannungen für den Menschen und unzulässig hohe Spannungen für angeschlossene elektrische Komponenten vermieden. Da mit der Höhe der Spannung auch entsprechend hohe Entladeströme beim Kurzschließen durch die Entladevorrichtung einhergehen, eignet sich für die Verhinderung von zu hohen Entladeströmen ein Widerstand, der in Reihe zu dem schaltenden Element der Entladevorrichtung angeordnet ist und je nach Dimensionierung den Entladestrom begrenzen kann.

Ebenso kann es sinnvoll sein, erst bei Unterschreiten einer vorgebbaren Spannung die Entladevorrichtung wirken zu lassen, da dann davon ausgegangen werden kann, dass die entstehenden Entladeströme hinreichend klein sind. Dies ist insbesondere dann der Fall, wenn die Entladevorrichtung bzw. die weitere Entladevorrichtung keinen Widerstand oder nur einen Widerstand mit geringer Impedanz zur Strombegrenzung aufweist. Ohne Widerstand lässt sich die Verlustleistung in der Entladevorrichtung besonders gering halten, so dass der Schalter verlustarm betrieben werden kann. Allerdings muss auch hier die Energie der Energiespeicher in Wärme umgesetzt werden. Dies geschieht dann außerhalb der Entladevorrichtung beispielsweise durch Leitungswiderstände. Da diese Leitungswiderstände relativ gering sind, erfolgt die Entladung mit relativ großen Strömen, die eine entsprechende Belastung des schaltenden Elements bedeuten. Um die Verluste im elektronischen Schalter und insbesondere in der Entladevorrichtung gering zu halten, kann ein entsprechender Widerstand auch außerhalb des elektronischen Schalters angeordnet sein.

Bei einer weiteren vorteilhaften Ausgestaltung der Erfindung wird die Verbindung des ersten Anschlusses des ersten Potentials und des ersten Anschlusses des zweiten Potentials unterbrochen, wenn eine Spannung zwischen dem ersten Anschluss des ersten Potentials und dem ersten Anschluss des zweiten Potentials ansteigt. Ein Ansteigen der Spannung zwischen den Potentialen kann darauf hindeuten, dass die Entladevorrichtung nicht wirksam ist oder wirksam werden kann. Ein möglicher Grund dafür ist, dass eine elektrische Energiequelle aktiv ist, die ein Entladen verhindert. Um eine Überlastung der Entladevorrichtung durch eine solche Energiequelle zu verhindern, soll die Entladevorrichtung in einem solchen Fall von den Anschlüssen getrennt werden. Dieser Fall ist dadurch erkennbar, dass trotz wirksamer Entladevorrichtung die Spannung an den Anschlüssen ansteigt oder über ein vorgebbares Zeitintervall konstant bleibt. Ebenso kann durch diese Überwachung der ansteigenden Spannung erkannt werden, wenn ein abgeschaltetes Teilnetz wieder betriebsfähig gemacht wird oder betriebsfähig ist und wieder mittels des elektronischen Schalters zugeschaltet werden soll. Somit kann die Zuschaltung weitgehend automatisiert durchgeführt werden, da die Entladeschaltung über eine entsprechende Selbstabschaltfunktion verfügt.

Es wird die Entladevorrichtung abgeschaltet, wenn beispielsweise durch eine externe Maßnahme die Spannung an den Anschlüssen des elektronischen Schalters ansteigen. Dies kann beispielsweise bei Aufschalten einer Batterie in dem Teilnetz der Fall sein. Das Abschalten der Entladevorrichtung erfolgt durch Ausschalten des vorhandenen schaltenden Elements. Dadurch wird ein gewolltes Aufladen des Teilnetzes nicht behindert und gleichzeitig eine Überlastung der Entladevorrichtung zuverlässig vermieden.

Im Folgenden wird die Erfindung anhand der in den Figuren dargestellten Ausführungsbeispiele näher beschrieben und erläutert. Es zeigen:
- FIG 1 und FIG 2: einen Gleichspannungsschalter,
- FIG 3 bis FIG 5: ein Gleichspannungsnetz und
- FIG 6 bis FIG 9: eine Entladevorrichtung.

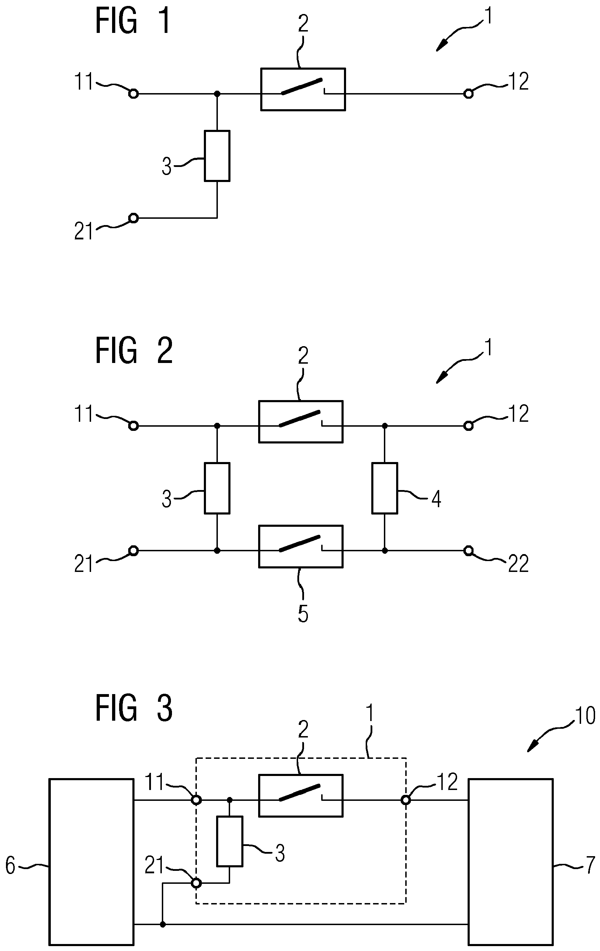

Die FIG 1 zeigt einen Gleichspannungsschalter 1. Zwischen dem ersten Anschluss 11 und dem zweiten Anschluss 12 eines ersten Potentials ist ein Schalter 2 angeordnet. Mit diesem Schalter 2 lässt sich eine elektrisch leitende Verbindung zwischen dem ersten Anschluss 11 des ersten Potentials und dem zweiten Anschluss 12 des ersten Potentials herstellen oder unterbrechen. Darüber hinaus weist der Gleichspannungsschalter 1 einen ersten Anschluss 21 eines zweiten Potentials auf. Zwischen diesem ersten Anschluss 21 des zweiten Potentials und dem ersten Anschluss 11 des ersten Potentials ist eine Entladevorrichtung 3 angeordnet. Die Entladevorrichtung 3 stellt sicher, dass nach Öffnen des Schalters 2 der erste Anschluss 11 des ersten Potentials und der erste Anschluss 21 des zweiten Potentials elektrisch miteinander verbunden sind. Damit wird eine Restspannung, die sich zwischen dem ersten und zweiten Potential ergeben oder anliegen könnte, beseitigt. Beispiele für eine solche Restspannung sind Kondensatoren, wie sie u.a. in Umrichtern vorhanden sind. Dieses Ausführungsbeispiel des Gleichspannungsschalters 1 eignet sich im Besonderen dafür, an den ersten Anschlüssen 11, 21 eine elektrische Komponente 6 als Last anzuschließen, die beim Abschalten noch eine Restspannung aufweisen könnte. An dem zweiten Anschluss 12 des ersten Potentials eignet sich dieser Gleichspannungsschalter 1 für die Verbindung mit einer hier nicht dargestellten elektrischen Energiequelle 7 oder mit einem ebenfalls hier nicht dargestellten Teilnetz 40, welches eine solche Energiequelle 7 aufweist.

Die FIG 2 zeigt ein weiteres Ausführungsbeispiel eines Gleichspannungsschalters 1. Zur Vermeidung von Wiederholungen wird auf die Beschreibung zur FIG 1 sowie auf die dort eingeführten Bezugszeichen verwiesen. Analog zu den ersten Anschlüssen 11, 21 des ersten bzw. des zweiten Potentials weist dieser Gleichspannungsschalter 1 auch einen zweiten Anschluss 22 des zweiten Potentials auf. Analog zu den ersten Anschlüssen 11, 21, die sich mittels einer Entladevorrichtung 3 kurzschließen lassen, weisen auch die zweiten Anschlüsse 12, 22 eine weitere Entladevorrichtung 4 auf, mit denen sich diese zweiten Anschlüsse 12, 22 kurzschließen lassen. Dadurch kann auch eine Restspannung an elektrischen Komponenten, die mit den zweiten Anschlüssen 12, 22 verbunden sind, vermieden und/oder beseitigt werden. Somit bietet dieses Ausführungsbeispiel des Gleichspannungsschalters 1 den Vorteil, an beiden Seiten des Gleichspannungsschalters 1 die hier nicht dargestellten verbundenen elektrischen Komponenten 6 oder das nicht dargestellte verbundene Teilnetz 40 über einen Widerstand kurzzuschließen. Darüber hinaus ist es möglich, zwischen dem ersten Anschluss 21 des zweiten Potentials und dem zweiten Anschluss 22 des zweiten Potentials einen weiteren Schalter 5 anzuordnen. Durch dieses weiteren Schalter 5 ist es möglich, die ersten Anschlüsse 11, 21 und die zweiten Anschlüsse 12, 22 mit beiden Potentialen, also mehrpolig bzw. zweipolig, voneinander zu trennen. Zum Unterbinden eines Stromflusses zwischen den ersten Anschlüssen 11, 21 und den zweiten Anschlüssen 12, 22 würde ein einzelner Schalter 2 bereits ausreichen. Der weitere Schalter 5 bietet die Möglichkeit, nicht nur den Stromfluss zu unterbinden, sondern auch die ersten Anschlüsse 11, 21 und die zweiten Anschlüsse 12, 22 potentialmäßig voneinander zu trennen. Dies ist insbesondere dann von Vorteil, um Erdschlüsse in einem Gleichspannungsnetz sicher beherrschen zu können. Darüber hinaus lassen sich die Komponenten des abgeschalteten Zweigs des Gleichspannungsnetzes problemlos erden, sofern keine Spannungs- oder Stromquellen aktiv sind.

Die FIG 3 zeigt ein Gleichspannungsnetz 10 mit einem Gleichspannungsschalter 1, der eine elektrische Komponente 6, insbesondere einen elektrischen Verbraucher bzw. eine elektrisehe Last, mit einer elektrischen Energiequelle 7 verbindet. Der Gleichspannungsschalter 1 ist dabei beispielhaft wie in FIG 1 ausgeführt. Zur Vermeidung von Wiederholungen wird auf die Beschreibung zu den Figuren 1 und 2 sowie auf die dort eingeführten Bezugszeichen verwiesen. Der erste Anschluss 11 des ersten Potentials des Gleichspannungsschalters 1 ist dabei mit der elektrischen Komponente 6 verbunden. Der zweite Anschluss 12 des ersten Potentials ist mit der elektrischen Energiequelle 7 verbunden. Die elektrische Komponente 6 und die elektrische Energiequelle 7 sind bezüglich ihres zweiten Potentials direkt miteinander verbunden. Dabei ist diese direkte Verbindung mit dem ersten Anschluss 21 des zweiten Potentials verbunden.

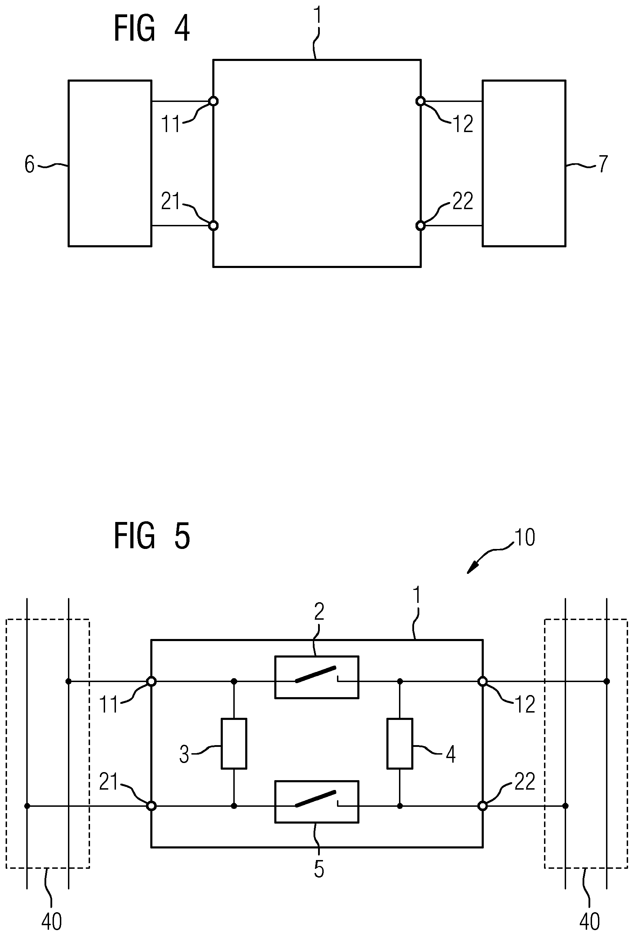

Die FIG 4 zeigt ein weiteres Ausführungsbeispiel eines Gleichspannungsnetzes 10. Der Gleichspannungsschalter 1 hat dabei vier Anschlüsse 11, 12, 21, 22. Für jedes der beiden Potentiale ist jeweils ein erster Anschluss 11, 21 und ein zweiter Anschluss 12, 22 vorhanden. Der Gleichspannungsschalter 1 weist dabei mindestens einen Schalter 2 und eine Entladevorrichtung 3 auf. Diese können beispielsweise, wie in der FIG 1 dargestellt, angeordnet sein. Darüber hinaus kann der Gleichspannungsschalter 1 auch eine weitere Entladungsvorrichtung 4 aufweisen, die vergleichbar mit der Schaltung der FIG 2 ausgeführt ist. Auch ist es optional möglich, einen weiteren Schalter 5 in die Verbindung zwischen dem ersten Anschluss 21 des zweiten Potentials und dem zweiten Anschluss 22 des zweiten Potentials anzuordnen, um eine Potentialtrennung bzw. Potentialfreiheit zwischen den Potentialen auf beiden Seiten des Gleichspannungsschalters 1 zu ermöglichen. Des Weiteren wird auf die Beschreibung zu den Figuren 1 bis 3 sowie auf die dort eingeführten Bezugszeichen verwiesen.

Die FIG 5 zeigt ein weiteres Ausführungsbeispiel eines Gleichspannungsnetzes 10. Dabei weist das Gleichspannungsnetz 10 zwei Gleichspannungsteilnetze 40 auf, die über den Gleichspannungsschalter 1 trennbar miteinander verbunden sind. Da beide Gleichspannungsteilnetze 40 hier nicht dargestellte elektrische Komponenten 6 aufweisen können, die beim Abschalten eine Restspannung aufweisen, ist es vorteilhaft, wenn der Gleichspannungsschalter 1 sowohl eine Entladevorrichtung 3 für die ersten Anschlüsse 11, 21 aufweist, sowie darüber hinaus eine weitere Entladevorrichtung 4 für die zweiten Anschlüsse 12, 22. Beim Trennen der beiden Gleichspannungsteilnetze 40 durch Öffnen des Gleichspannungsschalters 1 können beide Gleichspannungsteilnetze 40 unabhängig voneinander betrieben werden. Ebenso ist es möglich, eines oder beide der Gleichspannungsteilnetze 40 abzuschalten. Abgeschaltet, bedeutet in diesem Zusammenhang, dass keine elektrische Energiequelle in diesem Teilnetz mehr aktiv ist. Ein so abgeschaltetes Gleichspannungsteilnetz 40 kann mit Hilfe der Entladevorrichtung 3 bzw. mit Hilfe der weiteren Entladevorrichtung 4 spannungslos und bei Verwendung eines weiteren Schalters 5 auch potentialfrei gemacht werden. Dabei werden durch die Entladevorrichtung 3 bzw. der weiteren Entladevorrichtung 4, vorhandene Restspannungen, durch Entladeströme zu Null gebracht. Weist der Gleichspannungsschalter 1, wie dargestellt, auch einen weiteren Schalter 5 auf, so können die beiden Gleichspannungsteilnetze 40 auch potentialmäßig voneinander getrennt werden, unabhängig davon, ob sie abgeschaltet oder in einem voneinander isolierten Betrieb sind.

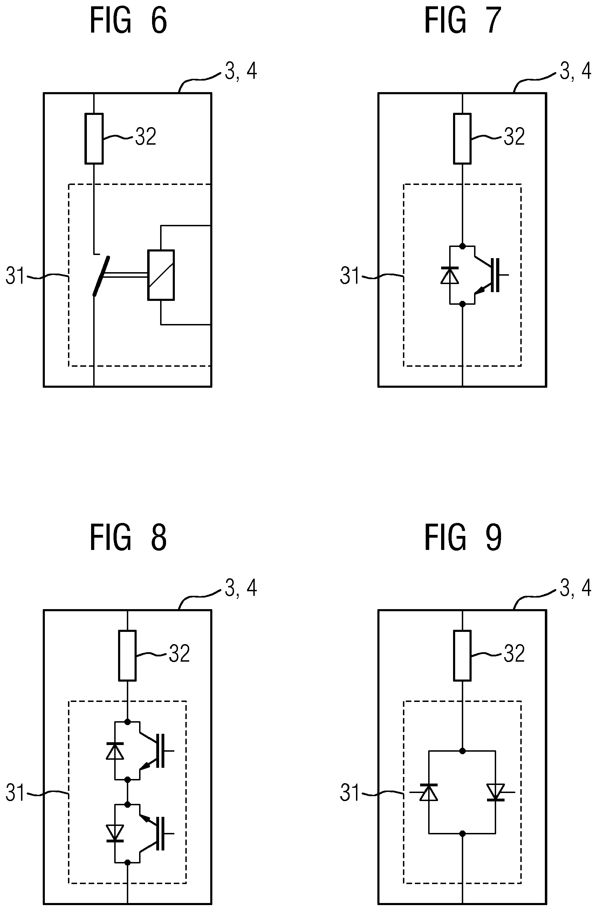

Die FIG 6 zeigt ein Ausführungsbeispiel für eine Entladevorrichtung 3 bzw. für eine weitere Entladevorrichtung 4. Dieses weist ein schaltendes Element 31 auf, mit dem die beiden ersten Anschlüsse 11, 21 bzw. die beiden zweiten Anschlüsse 12, 22 des Gleichspannungsschalters 1 kurzgeschlossen werden können. Bei dem Kurzschließen handelt es sich um ein auch als weiches Kurzschließen bezeichnetes Kurzschließen, da dieses hochohmig mit Hilfe eines Widerstandes erfolgt. Bei einem harten Kurzschließen, das auch möglich ist, würde das schaltende Element 31 die Anschlüsse direkt kurzschließen, ohne Widerstand. Die Entladevorrichtung ist dann widerstandslos. Die Ausführungsbeispiele der Figuren 6 bis 9 können ebenfalls auch alternativ auch widerstandslos ausgestaltet sein, indem der Widerstand 32 nicht vorhanden ist bzw. durch eine leitende Verbindung ersetzt ist.

In diesem Ausführungsbeispiel ist das schaltende Element 31 als mechanischer Schalter, beispielsweise als mechanisches Relais, realisiert. Um die Entladeströme beim Kurzschließen der ersten bzw. der zweiten Anschlüsse zu reduzieren, kann in Reihe zum schaltenden Element 31 ein Widerstand 32 angeordnet werden. Dieser Wiederstand 32 reduziert die Entladeströme und damit die Belastung für die zu entladende elektrische Komponente und auch das schaltende Element 31. Damit wird die Lebensdauer des Gleichspannungsschalters 1 erhöht.

Die FIG 7 zeigt ein weiteres Ausführungsbeispiel einer Entladevorrichtung 3 bzw. einer weiteren Entladevorrichtung 4, wobei das schaltende Element 31 als Halbleiterschalter ausgebildet ist. Auch bei dem Ausführungsbeispiel der FIG 8 ist das schaltende Element 31 als Halbleiterschalter ausgebildet. Im Gegensatz zur FIG 7 kann der Halbleiterschalter der FIG 8 für Spannungen unterschiedlicher Polarität verwendet werden. Dazu sind die beiden Halbleiter antiseriell angeordnet. Vorteilhafterweise sind die Halbleiter an ihrem Emitteranschluss miteinander verbunden. Mit anderen Worten sind die Halbleiter in einer Reihenschaltung angeordnet, bei dem die Halbleiter jeweils einen Strom in unterschiedlicher Polarität abschalten können. Der Kollektoranschluss des ersten Halbleiters bildet dann einen Anschluss der Entladevorrichtung. Der Kollektoranschluss des zweiten Halbleiters bildet den zweiten Anschluss der Entladevorrichtung für einen harten Kurzschließer oder, wie hier dargestellt ist an dem Kollektor der Widerstand 32 angeschlossen. Die Halbleiter an ihren Emitteranschlüssen miteinander zu verbinden bietet den Vorteil, die gleiche Ansteuerspannung für beide Halbleiter benutzen zu können, ohne eine Potentialtrennung für die einzelnen Ansteuerspannungen vorsehen zu müssen. Technisch ist es alternativ auch möglich, die Halbleiter an ihren Kollektoranschlüssen miteinander zu verbinden. Als Halbleiter kommen beispielsweise IGBT-Halbleiter in Frage.

FIG 9 zeigt ein weiteres Ausführungsbeispiel einer Entladevorrichtung 3 bzw. einer weiteren Entladevorrichtung 4. Das schaltende Element 31 wird hierbei durch Thyristoren gebildet. Diese sind so angeordnet, dass die Spannung an den beiden Anschlüssen unterschiedliche Polarität aufweisen kann. Ist an den Anschlüssen nur jeweils eine Polarität vorhanden, kann auf einen der parallel angeordneten Thyristoren verzichtet werden. Alternativ können in einer solchen Schaltungsanordnung auch andere rückwärts sperrende Halbleiter angeordnet werden.

Zusammenfassend betrifft die Erfindung einen Gleichspannungsschalter, aufweisend einen ersten Anschluss eines ersten Potentials, einen zweiten Anschluss des ersten Potentials und einen ersten Anschluss eines zweiten Potentials, wobei zwischen dem ersten Anschluss des ersten Potentials und dem zweiten Anschluss des ersten Potentials ein Schalter angeordnet ist. Zur Verbesserung des Gleichspannungsschalters wird vorgeschlagen, dass zwischen dem ersten Anschluss des ersten Potentials und dem ersten Anschluss des zweiten Potentials eine Entladevorrichtung angeordnet ist. Die Erfindung betrifft ferner ein Gleichspannungsnetz mit einem derartigen Gleichspannungsschalter, wobei das Gleichspannungsnetz eine elektrische Komponente aufweist, wobei die elektrische Komponente mit dem ersten Anschluss und dem zweiten Anschluss des ersten Potentials verbunden ist. Weiter betrifft die Erfindung ein Verfahren zum Betreiben eines derartigen Gleichspannungsschalters oder eines derartigen Gleichspannungsnetzes, wobei die Entladevorrichtung den ersten Anschluss des ersten Potentials und den ersten Anschluss des zweiten Potentials zumindest zeitweise miteinander verbindet, wenn der Gleichspannungsschalter ausgeschaltet wird oder ausgeschaltet ist.

## Patentansprüche

1. Gleichspannungsschalter (1), aufweisend
- einen ersten Anschluss (11) eines ersten Potentials,
- einen zweiten Anschluss (12) des ersten Potentials und
- einen ersten Anschluss (21) eines zweiten Potentials, wobei zwischen dem ersten Anschluss (11) des ersten Potentials und dem zweiten Anschluss (12) des ersten Potentials ein Schalter (2) angeordnet ist, wobei zwischen dem ersten Anschluss (11) des ersten Potentials und dem ersten Anschluss (21) des zweiten Potentials eine Entladevorrichtung (3) angeordnet ist.

2. Gleichspannungsschalter (1) nach Anspruch 1, wobei der Gleichspannungsschalter (1) einen zweiten Anschluss (22) des zweiten Potentials aufweist, wobei zwischen dem zweiten Anschluss (12) des ersten Potentials und dem zweiten Anschluss (22) des zweiten Potentials eine weitere Entladevorrichtung (4) angeordnet ist.

3. Gleichspannungsschalter (1) nach Anspruch 2, wobei zwischen dem ersten Anschluss (21) des zweiten Potentials und dem zweiten Anschluss (22) des zweiten Potentials ein weiterer Schalter (5) angeordnet ist.

4. Gleichspannungsschalter (1) nach Anspruch 3, wobei der Schalter (2) und der weitere Schalter (5) miteinander gekoppelt sind.

5. Gleichspannungsschalter (1) nach einem der Ansprüche 1 bis 4, wobei die Entladevorrichtung (3) und/oder die weitere Entladevorrichtung (4) derart ausgestaltet ist, die verbundenen Anschlüsse mit dem Erdpotential zu verbinden.

6. Gleichspannungsschalter (1) nach einem der Ansprüche 1 bis 5, wobei der Zustand der Entladevorrichtung (3) und/oder der weiteren Entladevorrichtung (4) anzeigbar ist.

7. Gleichspannungsschalter (1) nach einem der Ansprüche 1 bis 6, wobei die Entladevorrichtung ein schaltendes Element (31), insbesondere einen mechanischen Schalter, einen Halbleiterschalter oder einen Thyristor, aufweist.

8. Gleichspannungsschalter (1) nach Anspruch 7, wobei elektrisch in Reihe zum schaltenden Element (31) ein Widerstand (32), insbesondere ein Heißleiter, angeordnet ist.

9. Gleichspannungsnetz (10) mit einem Gleichspannungsschalter (1) nach einem der Ansprüche 1 bis 8, wobei das Gleichspannungsnetz (10) eine elektrische Komponente (6) aufweist, wobei die elektrische Komponente (6) mit dem ersten Anschluss (11) und dem zweiten Anschluss (12) des ersten Potentials verbunden ist.

10. Verfahren zum Betreiben eines Gleichspannungsschalters (1) nach einem der Ansprüche 1 bis 8 oder eines Gleichspannungsnetzes (10) nach Anspruch 9, wobei die Entladevorrichtung (3) den ersten Anschluss (11) des ersten Potentials und den ersten Anschluss (21) des zweiten Potentials zumindest zeitweise miteinander verbindet, wenn der Gleichspannungsschalter (1) ausgeschaltet wird oder ausgeschaltet ist.

11. Verfahren nach Anspruch 10, wobei der Gleichspannungsschalter (1) eine weitere Entladevorrichtung (4) gemäß Anspruch 3 aufweist, wobei die weitere Entladevorrichtung (4) den zweiten Anschluss (12) des ersten Potentials und den zweiten Anschluss (22) des zweiten Potentials zumindest zeitweise miteinander verbindet, wenn der Gleichspannungsschalter (1) ausgeschaltet wird oder ausgeschaltet ist.

12. Verfahren nach einem der Ansprüche 10 oder 11, wobei das Verbinden erfolgt, wenn der Gleichspannungsschalter (1) ausgeschaltet ist und eine Spannung zwischen dem ersten Anschluss (11) des ersten Potentials und dem ersten Anschluss (21) des zweiten Potentials und/oder eine Spannung zwischen dem zweiten Anschluss (12) des ersten Potentials und dem zweiten Anschluss (22) des zweiten Potentials einen vorgebbaren Wert überschreitet oder unterschreitet.

13. Verfahren nach einem der Ansprüche 10 bis 12, wobei die Verbindung des ersten Anschlusses (11) des ersten Potentials und des ersten Anschlusses (21) des zweiten Potentials unterbrochen wird, wenn eine Spannung zwischen dem ersten Anschluss (11) des ersten Potentials und dem ersten Anschluss (21) des zweiten Potentials ansteigt.
